# DEMANDE DE BREVET EUROPEEN

(11) **EP 1 249 627 A1**
(43) Date de publication de la demande: **16.10.2002**
(21) Numéro de dépôt: 02290848.7
(22) Date de dépôt: 05.04.2002
(51) Int. Cl.: F16D 29/00

(54) **Actionneur électrique à système de compensation compact**

(30) Priorité: 11.04.2001 FR 0104988
(71) Demandeur: Renault s.a.s., 92100 Boulogne Billancourt (FR)
(72) Inventeur: Kakona, Asseté, 78390 Bois d'Arcy (FR); Mercay, Patrice, 78170 La Celle Saint Cloud (FR)

(57) **Abrégé**

Actionneur électrique comprenant un moteur électrique 1 dont l'arbre de sortie agit par un système vis-écrou 2, 3 sur un organe d'actionnement 5, par exemple un piston hydraulique, un ressort d'assistance 12 et des basculeurs 13 à galets agissant entre un plateau mobile 24 sollicité par le ressort d'assistance et un plateau 25 lié à l'organe d'actionnement 5.

Les basculeurs 13 et les plateaux 24, 25 sont conformés de manière à permettre des courses croisées des deux plateaux, chaque basculeur comprenant un levier pivotant tridimensionnel 13 à galets 18, 19, et le plateau 24 sollicité par le ressort d'assistance 12 étant un plateau annulaire ayant un diamètre intérieur supérieur au diamètre extérieur du plateau 25 lié à l'organe d'actionnement 5.

## Description

La présente invention se rapporte aux actionneurs électriques, notamment pour commande d'embrayage ou de passage de vitesses sur boîte de vitesses robotisée, et concerne plus particulièrement un système compacte de compensation pour un tel actionneur.

Actionner un embrayage entre un moteur et une boîte de vitesses consiste à enfoncer le diaphragme de l'embrayage pour désaccoupler la boîte de vitesses du moteur, et à relâcher l'effort appliqué au diaphragme pour ré-accoupler la boîte de vitesses au moteur.

Le diaphragme qui est l'organe principal d'animation de l'embrayage est un ressort conique en forme de rondelle Belleville élaborée. Lorsque l'embrayage est fermé, le mécanisme applique à la rondelle Belleville un effort de serrage de la friction d'embrayage (tarage de l'embrayage). L'ouverture de l'embrayage est effectuée en réalisant une course (course de débrayage) avec un effort supérieur à la rigidité de la rondelle Belleville.

Un actionneur électrique de commande d'embrayage comprend un moteur électrique pour réaliser la course de débrayage, et un système de compensation fournissant un effort d'appoint au moteur électrique pour permettre à ce dernier d'accomplir le travail auquel il est dédié, à savoir l'effort correspondant à l'effort d'écrasement de la rondelle Belleville de l'embrayage.

Pour plus de détails concernant la fonction et un mode de réalisation d'un tel système de compensation sur un actionneur de commande d'embrayage, il est fait référence à la demande de brevet FR-A-2 721 264.

Suivant ce document, le système de compensation comprend un ressort d'assistance agissant en parallèle avec le moteur électrique et des moyens mécaniques de compensation qui modulent l'action du ressort d'assistance, ce qui permet d'utiliser un moteur électrique de puissance relativement faible.

Toujours suivant ce document, le ressort d'assistance exerce son effort sur un plateau mobile à partir duquel cet effort est transmis à un piston hydraulique d'actionnement de l'embrayage par l'intermédiaire de deux basculeurs qui sont intercalés entre ledit plateau mobile et un autre plateau lié audit piston. Chaque basculeur monté pivotant autour d'un axe transversal fixe comprend deux galets en contact avec les plateaux précités. Les basculeurs sont chargés de moduler, à savoir de déphaser, d'amplifier et d'inverser l'effort fourni par le ressort d'assistance en fonction de la position du piston sous l'action du moteur électrique.

L'actionneur connu par ce document présente de multiples inconvénients. La conformation de chaque basculeur sous la forme d'un levier plat portant les deux galets dans son plan de pivotement complique l'assemblage de l'actionneur dans son ensemble et implique un encombrement axial important. Tel que celà est évident à l'étude de la figure 8 du document précité, le carter de l'actionneur est nécessairement divisé en deux parties, pour permettre le montage du système de compensation. Du fait de cette division du carter, la chambre pour le piston d'actionnement de l'embrayage doit être rapportée dans ce carter en deux parties.

La présente invention vise un actionneur électrique dont le système de compensation est conçu de manière à présenter un encombrement axial réduit. L'invention vise également un actionneur électrique dont le système de compensation est conçu de manière à permettre un assemblage simple dans un carter non divisé, lequel peut ainsi constituer directement la chambre pour un piston hydraulique d'actionnement.

L'actionneur électrique objet de la présente invention comprend un moteur électrique dont l'arbre de sortie agit par un système vis-écrou sur un organe d'actionnement, par exemple un piston hydraulique, un système de compensation comprenant un ressort d'assistance agissant en parallèle avec le moteur, et des moyens de compensation comprenant des basculeurs à galets agissant entre un plateau mobile sollicité par le ressort d'assistance et un plateau lié à l'organe d'actionnement. Les basculeurs et les plateaux sont conformés de manière à permettre des courses croisées des deux plateaux.

A cet effet, chaque basculeur peut être avantageusement constitué par un levier pivotant tridimensionnel ayant deux bras de levier à la fois décalés suivant l'axe de pivotement et décalés angulairement, et portant à leur extrémité libre deux galets décalés l'un par rapport à l'autre suivant l'axe de pivotement du levier et mobiles en rotation autour d'axes parallèles l'un par rapport à l'autre et par rapport à l'axe de pivotement du levier. Le plateau sollicité par le ressort d'assistance est avantageusement un plateau annulaire ayant un diamètre intérieur supérieur au diamètre extérieur du plateau lié à l'organe d'actionnement.

Cette conformation des basculeurs et des plateaux permet de disposer le ressort d'assistance à l'opposé du moteur électrique de l'actionneur et de faire agir les deux galets de chaque basculeur dans le même sens axial sur les deux plateaux, ce qui réduit encore l'encombrement axial de l'actionneur dans son ensemble.

De préférence, l'axe de pivotement du levier peut être situé sur le bras de levier portant le galet en contact avec le plateau sollicité par le ressort d'assistance en étant avantageusement plus proche de l'extrémité de raccordement de même bras à l'autre bras que de l'extrémité libre de ce même bras portant ledit galet.

Les deux bras du levier peuvent avantageusement être décalés angulairement de l'ordre de 90° l'un par rapport à l'autre.

Les axes de pivotement des leviers pivotants sont avantageusement montés sur des supports disposés sur une plaque intercalée entre le moteur électrique et le carter de l'actionneur, ce qui permet un assemblage simple de l'ensemble dans un carter d'une seule pièce qui peut en même temps former la chambre pour le piston hydraulique d'actionnement de l'élément à commander, par exemple un embrayage.

En se référant aux dessins schématiques annexés, on va décrire ci-après plus en détail un mode de réalisation illustratif d'un actionneur selon l'invention; sur les dessins:

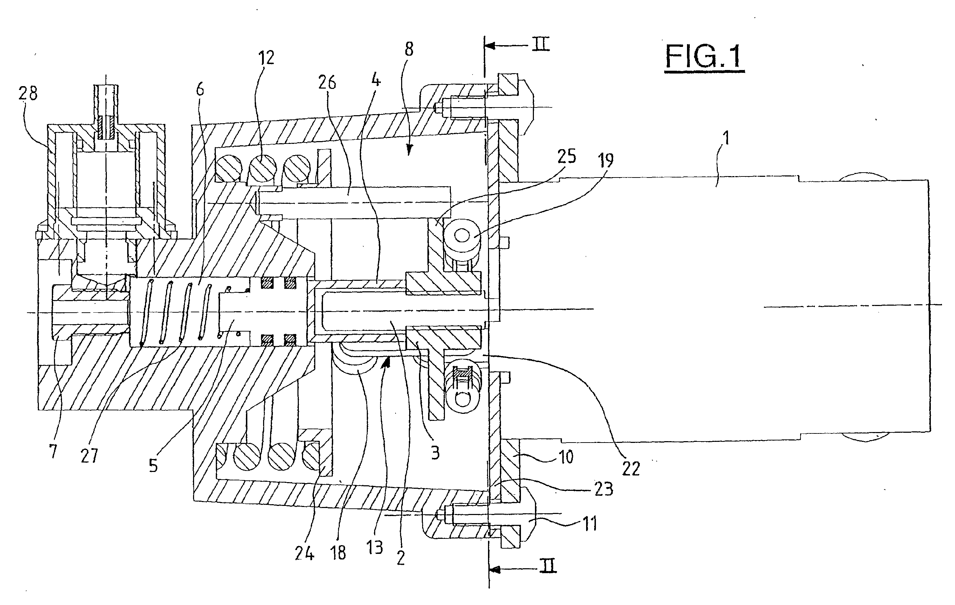

- la figure 1 est une vue latérale, partiellement en coupe axiale,d'un actionneur selon l'invention;
- la figure 2 est une coupe suivant II-II de la figure 1;

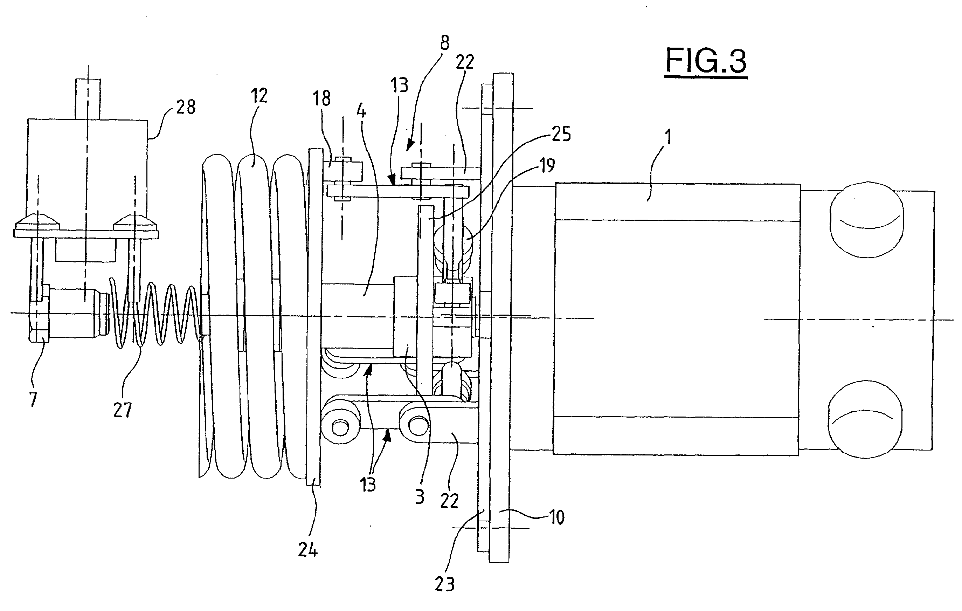

- la figure 3 est une vue latérale de l'actionneur de la figure 1, sans le carter, et
- la figure 4 est une vue tridimensionnelle des trois basculeurs du système de compensation de l'actionneur selon les figures 1 à 3.

L'actionneur tel qu'illustré est un actionneur électrique par exemple pour commande d'embrayage ou de passage de vitesses sur boîte de vitesses robotisée. L'actionneur comprend de façon usuelle un moteur électrique 1 dont l'arbre de sortie 2 fileté formant vis est en prise avec un écrou 3 qui agit par un poussoir 4 sur un piston 5 servant de piston émetteur pour une transmission hydraulique de commande de l'embrayage ou autre élément à commander. Sur les dessins, les seuls éléments représentés de cette transmission sont la chambre 6 dans laquelle coulisse le piston 5 et un embout de raccordement 7.

L'actionneur comprend par ailleurs un système de compensation 8 enfermé dans un carter 9 réalisé d'une seule pièce en forme de godet. Le carter 9 qui définit également la chambre 6 pour le piston 5 est assemblé, côté ouvert, par une bride 10 et des vis 11 avec le moteur électrique 1, du côté le l'arbre de sortie 3 de ce dernier.

Le système de compensation 8 comprend un ressort d'assistance 12 agissant en parallèle avec le moteur électrique 1 pour fournir un effort d'appoint au moteur 1, et des moyens mécaniques de compensation qui modulent l'action du ressort d'assistance 12.

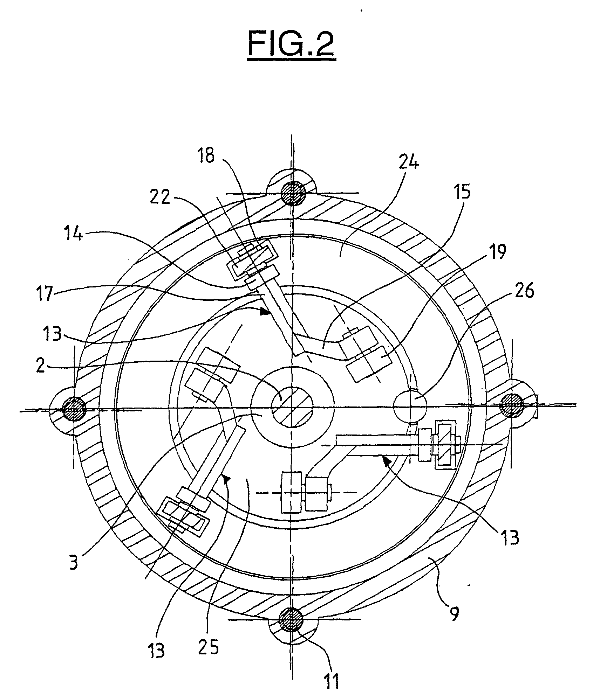

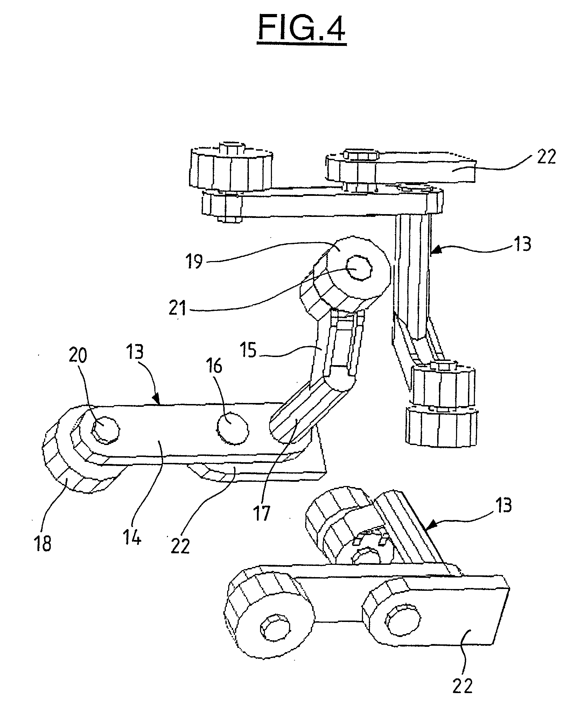

Les moyens de compensation comprennent trois basculeurs 13 en forme de leviers pivotants présentant chacun, comme le montrent surtout les figures 2 et 4, un bras de levier 14 long et un bras de levier 15 court, l'axe de pivotement 16 du levier 13 se situant sur le bras 14 et les deux bras 14 et 15 étant reliés entre eux par un axe de liaison 17 de telle manière que les deux bras 14 et 15 soient décalés l'un par rapport à l'autre suivant l'axe de pivotement 16 et angulairement. Le décalage angulaire des deux bras 14 et 15 est de l'ordre de 90° dans l'exemple illustré. Chaque bras 14, 15 porte un galet 18, 19 à son extrémité libre, les axes de rotation 20, 21 des galets 18,19 étant parallèles l'un par rapport à l'autre et par rapport à l'axe de pivotement 16.

Tel que cela apparaît surtout sur la figure 4, l'axe de pivotement 16 de chaque levier 13 est situé sur le bras 14 en étant plus proche de l'extrémité de raccordement du bras 14 au bras 15 (ou plutôt à l'axe de liaison 17) que de l'extrémité libre du bras 14, portant le galet 18.

Les axes de pivotement 16 des leviers 13 sont montés sur des supports 22 solidaires d'une plaque 23 intercalée entre le moteur 1 et le carter 9.

Le ressort d'assistance 12 est constitué par un ressort hélicoïdal de compression serré entre le fond du carter 9 et un plateau d'appui 24 de forme annulaire, monté de façon mobile en translation axiale dans le carter.

L'écrou 3 comporte un élargissement radial formant un plateau 25 de diamètre extérieur inférieur au diamètre intérieur du plateau d'appui 24.

Un axe d'indexage 26 fixé au fond du carter 9 empêche la rotation de l'écrou 3 et également du plateau d'appui 24 du ressort 12.

Les leviers pivotants 13 coopèrent avec les deux plateaux 24 et 25, les galets 18 étant en appui contre le plateau 24 et les galets 19 étant en appui contre le plateau 25, en coopérant dans le même sens axial avec les faces des plateaux 24, 25 tournées vers le moteur 1.

Lorsque le moteur 1 est mis sous tension en vue de l'actionnement de l'élément à commander, par exemple un embrayage, le plateau 25 est déplacé par l'écrou 3 de la position selon les dessins, dans laquelle il se trouve à la droite du plateau 24 d'appui du ressort 12, vers la gauche à une position non représentée, à laquelle le piston 5 qui se déplace conjointement avec l'écrou 3 se trouve en position d'actionnement, alors que les leviers pivotants 13, en basculant, permettent au plateau 24, sous la poussée du ressort 12, de se déplacer vers la droite, jusqu'au-delà de la position du plateau 25.

Les deux plateaux 24 et 25 ont donc des courses croisées.

Un ressort de rappel 27 intercalé entre le piston 5 et le fond de la chambre 6 renfermant le piston 5 sollicite ce dernier en direction du moteur 1.

Une électro-valve 28 montée sur le carter 9 assure de façon connue en soi le contrôle de l'actionneur en ce sens que l'électro-valve doit être sous tension pour être fermée et permettre le fonctionnement de l'actionneur.

Le principe de fonctionnement de l'actionneur tel que décrit et représenté sur les dessins correspond à celui des actionneurs connus, notamment selon la demande de brevet FR-A- 2 721 264. Les différences concernent surtout les basculeurs 13 du système de compensation 8 et les plateaux 24 et 25, dont les conformations permettent des courses croisées des plateaux, d'où un encombrement axial réduit, et le montage des basculeurs 13 sur la plaque de support 23 du côté du moteur 1, ce qui simplifie la réalisation et l'assemblage du système de compensation et de l'actionneur dans son ensemble.

## Revendications

1. Actionneur électrique comprenant un moteur électrique (1) dont l'arbre de sortie agit par un système vis-écrou (2, 3) sur un organe d'actionnement (5), par exemple un piston hydraulique, un système de compensation (8) comprenant un ressort d'assistance (12) agissant en parallèle avec le moteur, et des moyens de compensation comprenant des basculeurs (13) à galets agissant entre un plateau mobile (24) sollicité par le ressort d'assistance et un plateau (25) lié à l'organe d'actionnement, **caractérisé par le fait que** le plateau (24) sollicité par le ressort d'assistance est un plateau annulaire ayant un diamètre intérieur supérieur au diamètre extérieur du plateau (25) lié à l'organe d'actionnement et que les basculeurs (13) sont conformés de manière à permettre des courses croisées des deux plateaux.

2. Actionneur suivant la revendication 1, **caractérisé par le fait que** chaque basculeur est constitué par un levier pivotant tridimensionnel (13) ayant deux bras de levier (14, 15) à la fois décalés suivant l'axe de pivotement (16) et décalés angulairement, et portant à leur extrémité libre deux galets (18, 19) décalés l'un par rapport à l'autre suivant l'axe de pivotement du levier et mobiles en rotation autour d'axes (20, 21) parallèles l'un par rapport à l'autre et par rapport à l'axe de pivotement (16) du levier.

3. Actionneur suivant la revendication 1 ou 2, **caractérisé par le fait que** le ressort d'assistance (12) est disposé à l'opposé du moteur électrique (1) et que les deux galets (18, 19) de chaque levier pivotant (13) agissent dans le même sens axial sur les deux plateaux (24, 25).

4. Actionneur suivant la revendication 2 ou 3, **caractérisé par le fait que** l'axe de pivotement (16) du levier pivotant (13) est situé sur le bras de levier (14) portant le galet (18) en contact avec le plateau (24) sollicité par le ressort d'assistance (12) en étant plus près de l'extrémité de raccordement de ce même bras (14) à l'autre bras (15) que de l'extrémité libre de ce même bras (14) portant ledit galet (18).

5. Actionneur suivant l'une quelconque des revendications 2 à 4, **caractérisé par le fait que** les deux bras (14, 15) du levier pivotant sont décalés angulairement de l'ordre de 90° l'un par rapport à l'autre.

6. Actionneur suivant l'une quelconque des revendications 2 à 5, **caractérisé par le fait que** les axes de pivotement (16) des leviers pivotants (13) sont montés sur des supports (22) disposés sur une plaque (23) intercalée entre le moteur électrique (1) et le carter (9) entourant le système de compensation (8).

7. Actionneur suivant la revendication 6 , **caractérisé par le fait que** le carter entourant le système de compensation (8) est un carter (9) d'une seule pièce définissant également la chambre (6) pour le piston d'actionnement (5).
